# EUROPEAN PATENT SPECIFICATION

(11) **EP 3 566 149 B1**
(45) Date of publication and mention of the grant of the patent: **02.11.2022**
(21) Application number: 17895251.1
(22) Date of filing: 28.09.2017
(51) Int. Cl.: G06F 16/29, G01C 21/00

(54) **SYSTEMS AND METHODS FOR UPDATING POI INFORMATION**
SYSTEME UND VERFAHREN ZUR AKTUALISIERUNG VON POI-INFORMATION
SYSTÈMES ET MÉTHODES DE MISE À JOUR D'INFORMATION DE POINTS D'INTÉRÊT (POI)

(30) Priority: 06.02.2017 CN 201710065798
(43) Date of publication of application: 13.11.2019
(73) Proprietor: BEIJING DIDI INFINITY TECHNOLOGY AND DEVELOPMENT CO., LTD., Beijing 100193 (CN)
(72) Inventor: LI, Xiulin, Beijing 100193 (CN)
(74) Representative: Wang, Bo
(86) International application number: PCT/CN2017/103885
(87) International publication number: WO 2018/141159

(56) References cited:
- WO-A1-2016/113957
- CN-A- 102 750 949
- CN-A- 103 853 740
- CN-A- 104 951 466
- JP-A- 2004 239 727
- US-A1- 2003 167 120
- US-A1- 2011 196 602

## Description

### CROSS-REFERENCE TO RELATED APPLICATIONS

This application claims priority of Chinese Patent Application No.201710065798.1, filed on February 6, 2017.

### TECHNICAL FIELD

The present disclosure generally relates to data updating, and more particularly, to systems and methods for POI information updating through on-line services.

### BACKGROUND

Location Based Services (LBS) are widely used in electrical maps, online to offline (020), social services, etc. As a carrier for information of a location, point of interest (POI) information is very important to the LBS. In real life, the POI information may change rapidly with urban development and/or fluctuation of the economy. Conventionally, surveyors are used to inspect various places periodically to update the POI information of the places. Such a process can be time-consuming, expensive, strenuous and inefficient. Thus, there is a need for a system and method to update the POI information (e.g., POI names) more efficiently. Document WO2016113957A1 describes a method to reduce a POI retrieval load and provide a user with non-overlapping POI information. A POI information provision server is provided with: a communication unit for acquiring, from a POI information provision device, a POI retrieval request signal requesting POI retrieval; a storage unit for storing user speech information containing a POI genre if user speech audio information specifying the genre is included in the POI retrieval request signal; and a control unit for, if user speech audio information specifying a POI genre is included in the POI retrieval request signal, retrieving a POI of a genre specified by the audio information and, if user speech audio information specifying a POI genre is not included in the POI retrieval re-quest signal, determining whether a prescribed POI retrieval condition has been met and if the prescribed POI retrieval condition has been met, retrieving a POI of a genre specified by the user speech information and generating POI notification information including audio information pertaining to the retrieved POI.

### SUMMARY

According to an aspect of the present disclosure, a system for updating point of interest (POI) information is provided. The system may include at least one storage medium and at least one processor configured to communicate with the at least one storage medium. The at least one storage medium includes a set of instructions for updating POI information. When the at least one processor executes the set of instructions, the at least one processor is directed to perform one or more of the following operations. The at least one processor obtains voice data relating to a journey and comprising information indicative of a location. The at least one processor generates target text relating to the location in the journey based on the voice data. The at least one processor obtains location information of the location in the journey, the location information of the location being related to a geographic information of the location. The at least one processor obtains POI information of the location based on the location information from a POI information database for storing POI information, the POI information of the location including one or more names of a POI. The at least one processor adds the target text relating to the location into the POI information of the location if the target text is not included in the POI information and a similarity value between the target text relating to the location and the POI information of the location exceeds a first threshold.

According to another aspect of the present disclosure, a method for updating point of interest (POI) information is provided. The method may include one or more of the following operations. Voice data relating to a journey and comprising information indicative of a location is obtained. Target text relating to a location in the journey is generated based on the voice data. Location information of the location in the journey is obtained, the location information of the location being related to a geographic information of the location. POI information of the location is obtained based on the location information from a POI information database, the POI information of the location including one or more names of a POI. The target text is added into the POI information of the location if the target text is not included in the POI information and a similarity value between the target text relating to the location and the POI information of the location exceeds a first threshold.

In some embodiments, generating the target text relating to the location in the journey based on the voice data may include transforming the voice data relating to a journey into text and extracting the target text relating to a location in the journey from the text generated by the transformation.

In some embodiments, generating the target text relating to the location in the journey based on the voice data may further include identifying target voice data relating to a location from the voice data relating to the journey and transforming the voice data relating to the locating into the target text.

In some embodiments, when the similarity value is smaller than the first threshold value, the at least one processor may further obtain a first number and a second number. The first number may represent the number of times that the location is referred to as the target text, and the second number may represent the number of times that the location is referred to.

In some embodiments, the at least one processor may be further directed to calculate a ratio of the first number to the second number. If the ratio is larger than a second threshold value, the at least one processor may add the target text into the POI information of the location.

In some embodiments, if the ratio is smaller than the second threshold value, the at least one processor may acquire verification information and add the target text into the POI information based on the verification information.

In some embodiments, if the ratio is smaller than the second threshold value, the at least one processor may receive a verified text relating to the location and add the verified text into the POI information of the location.

In some embodiments, acquiring location information of the location may further include acquisition of longitude and latitude information of the location by monitoring a mobile terminal that is associated with a vehicle that reaches the location in the journey.

In some embodiments, the voice data may be provided by a requester terminal making an on-demand request for the journey.

In some embodiments, the POI information of the location may include location information and one or more names of the POI, and the target text includes a name of the POI.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities and combinations set forth in the detailed examples discussed below.

### BRIEF DESCRIPTION OF THE DRAWINGS

The present disclosure is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
FIG. 1 is a block diagram illustrating an exemplary data updating system according to some embodiments of the present disclosure;
FIG. 2 is a schematic diagram illustrating exemplary hardware and/or software components of an exemplary computing device according to some embodiments of the present disclosure;
FIG. 3 is a schematic diagram illustrating exemplary hardware and/or software components of an exemplary mobile device according to some embodiments of the present disclosure;
FIG. 4 is a block diagram illustrating an exemplary processing engine according to some embodiments of the present disclosure;
FIG. 5 is a flowchart illustrating an exemplary process for updating POI information based on voice data according to some embodiments of the present disclosure;
FIG. 6 is a flowchart illustrating an exemplary process for generating target text relating to a location according to some embodiments of the present disclosure;
FIG. 7 is a flowchart illustrating an exemplary process for generating target text relating to a location according to some embodiments of the present disclosure; and
FIG. 8 is a flowchart illustrating an exemplary process for updating POI names of a location according to some embodiments of the present disclosure.

### DETAILED DESCRIPTION

The following description is presented to enable any person skilled in the art to make and use the present disclosure, and is provided in the context of a particular application and its requirements. Various modifications to the disclosed embodiments will be readily apparent to those skilled in the art, and the general principles defined herein may be applied to other embodiments and applications without departing from the scope of the present disclosure as defined in the appended claims. Thus, the present disclosure is not limited to the embodiments shown, but is to be accorded the widest scope consistent with the claims.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprise," "comprises," and/or "comprising," "include," "includes," and/or "including," when used in this specification, specify the presence of stated features, integers, operations, operations, elements, and/or components, but do not preclude the presence or addition of one or more other features, integers, operations, operations, elements, components, and/or groups thereof.

These and other features, and characteristics of the present disclosure, as well as the methods of operation and functions of the related elements of structure and the combination of parts and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure. It is understood that the drawings are not to scale.

The flowcharts used in the present disclosure illustrate operations that systems implement according to some embodiments in the present disclosure. It is to be expressly understood, the operations of the flowchart may be implemented not in order. Conversely, the operations may be implemented in inverted order, or simultaneously. Moreover, one or more other operations may be added to the flowcharts. One or more operations may be removed from the flowcharts.

Moreover, while the system and method in the present disclosure is described primarily in regard to allocate a set of sharable orders, it should also be understood that this is only one exemplary embodiment. The system or method of the present disclosure may be applied to any other kind of on-demand service. For example, the system or method of the present disclosure may be applied to transportation systems of different environments including land, ocean, aerospace, or the like, or any combination thereof. The vehicle of the transportation systems may include a taxi, a private car, a hitch, a bus, a train, a bullet train, a high speed rail, a subway, a vessel, an aircraft, a spaceship, a hot-air balloon, a driverless vehicle, or the like, or any combination thereof. The transportation system may also include any transportation system for management and/or distribution, for example, a system for sending and/or receiving an express. The application of the system or method of the present disclosure may include a webpage, a plug-in of a browser, a client terminal, a custom system, an internal analysis system, an artificial intelligence robot, or the like, or any combination thereof.

The term "passenger," "requester," "requestor," "service requester," "service requestor" and "customer" in the present disclosure are used interchangeably to refer to an individual, an entity or a tool that may request or order a service. Also, the term "driver," "provider," "service provider," and "supplier" in the present disclosure are used interchangeably to refer to an individual, an entity or a tool that may provide a service or facilitate the providing of the service. The term "user" in the present disclosure may refer to an individual, an entity or a tool that may request a service, order a service, provide a service, or facilitate the providing of the service. For example, the user may be a passenger, a driver, an operator, or the like, or any combination thereof. In the present disclosure, "passenger" and "passenger terminal" may be used interchangeably, and "driver" and "driver terminal" may be used interchangeably.

The term "request," "service," "service request," and "order" in the present disclosure are used interchangeably to refer to a request that may be initiated by a passenger, a requester, a service requester, a customer, a driver, a provider, a service provider, a supplier, or the like, or any combination thereof. The service request may be accepted by any one of a passenger, a requester, a service requester, a customer, a driver, a provider, a service provider, or a supplier. The service request may be chargeable or free.

The positioning technology used in the present disclosure may be based on a global positioning system (GPS), a global navigation satellite system (GLONASS), a compass navigation system (COMPASS), a Galileo positioning system, a quasi-zenith satellite system (QZSS), a wireless fidelity (WiFi) positioning technology, or the like, or any combination thereof. One or more of the above positioning systems may be used interchangeably in the present disclosure.

The present disclosure is directed to systems and methods for updating POI information. In some embodiments, the POI information updating relates to an on-demand service, such as online taxi hailing including taxi transportation services. Especially for online taxi, which allows a user of the service to distribute a service request to a large number of individual service providers (e.g., taxi) with various distances away from the user in real time. And it also allows a plurality of service providers to respond to the service request simultaneously and in real-time. During this process, a large amount of information, for example, POI information may be acquired. The acquired information may be used for data updating of a database through internet.

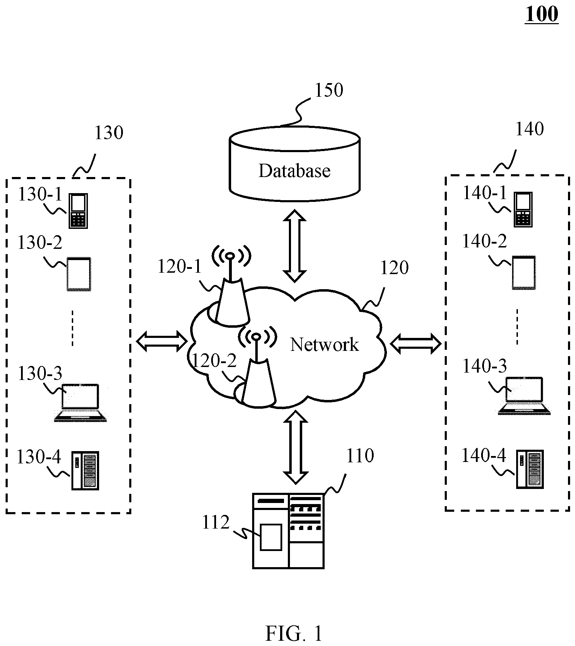

FIG. 1 is a block diagram of an exemplary data updating system 100 according to some embodiments of the present disclosure. The data updating system 100 may be an online on-demand service platform for on-demand services such as taxi hailing service, goods delivery service, chauffeur service, express car service, carpool service, bus service, short-term driver-renting service, and shuttle service. The data updating system 100 may include a server 110, a network 120, a requester terminal 130, a provider terminal 140, and a database 150.

The server 110 may access data and/or information from the requester terminal 130, the provider terminal 140, and/or the database150. The server 110 may be a single server, or a server group. The server group may be centralized, or distributed (e.g., the server 110 may be a distributed system). In some embodiments, the server 110 may be local or remote. In some embodiments, the server 110 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

In some embodiments, the server 110 may include a processing engine 112. The processing engine 112 may process information and/or data related to the POI information updating to perform one or more functions described in the present disclosure. In some embodiments, the processing engine 112 may include one or more processing engines (e.g., single-core processing engine(s) or multi-core processor(s)). Merely by way of example, the processing engine 112 may include a central processing unit (CPU), an application-specific integrated circuit (ASIC), an application-specific instruction-set processor (ASIP), a graphics processing unit (GPU), a physics processing unit (PPU), a digital signal processor (DSP), a field programmable gate array (FPGA), a programmable logic device (PLD), a controller, a microcontroller unit, a reduced instruction-set computer (RISC), a microprocessor, or the like, or any combination thereof.

The network 120 may facilitate exchange of information and/or data. In some embodiments, one or more components in the data updating system 100 (e.g., the server 110, the requester terminal 130, the provider terminal 140, and the database 150) may send information and/or data to other component(s) in the data updating system 100 via the network 120. For example, the server 110 may obtain/acquire service request from the requester terminal 130 via the network 120. In some embodiments, the network 120 may be any type of wired or wireless network, or combination thereof. Merely by way of example, the network 130 may include a cable network, a wireline network, an optical fiber network, a tele communications network, an intranet, an Internet, a local area network (LAN), a wide area network (WAN), a wireless local area network (WLAN), a metropolitan area network (MAN), a wide area network (WAN), a public telephone switched network (PSTN), a Bluetooth network, a ZigBee network, a near field communication (NFC) network, or the like, or any combination thereof. In some embodiments, the network 120 may include one or more network access points. For example, the network 120 may include wired or wireless network access points such as base stations and/or internet exchange points 120-1, 120-2, through which one or more components of the data updating system 100 may be connected to the network 120 to exchange data and/or information.

The requester terminal 130 may send information and/or data to the server 110 via the network 120. In some embodiments, the requester terminal 130 may include a mobile device 130-1, a tablet computer 130-2, a laptop computer 130-3, a built-in device in a motor vehicle 130-4, or the like, or any combination thereof. In some embodiments, the mobile device 130-1 may include a wearable device, a smart mobile device, a virtual reality device, an augmented reality device, or the like, or any combination thereof. In some embodiments, the wearable device may include a smart bracelet, a smart footgear, a smart glass, a smart helmet, a smart watch, a smart clothing, a smart backpack, a smart accessory, or the like, or any combination thereof. In some embodiments, the smart mobile device may include a smartphone, a personal digital assistance (PDA), a gaming device, a navigation device, a point of sale (POS) device, or the like, or any combination thereof. In some embodiments, the virtual reality device and/or the augmented reality device may include a virtual reality helmet, a virtual reality glass, a virtual reality patch, an augmented reality helmet, an augmented reality glass, an augmented reality patch, or the like, or any combination thereof. For example, the virtual reality device and/or the augmented reality device may include a Google Glass, an Oculus Rift, a Hololens, a Gear VR, etc. In some embodiments, built-in device in the motor vehicle 130-4 may include an onboard computer, an onboard television, etc. In some embodiments, the requester terminal 130 may be a device with positioning technology for locating the position of the requester and/or the requester terminal 130. In some embodiments, the requester terminal 130 may send the on-demand service to the server 110 in a way of speech input by a requester.

In some embodiments, the provider terminal 140 may be similar to, or the same device as the requester terminal 130. In some embodiments, the provider terminal 140 may correspond to the server 110 in a way of speech input by a provider.

The database 150 may store data and/or instructions. In some embodiments, the database 150 may store data obtained from the requester terminal 130 and/or the provider terminal 140. In some embodiments, the database 150 may store data and/or instructions that the server 110 may execute or use to perform exemplary methods described in the present disclosure. In some embodiments, the database 150 may include a mass storage, a removable storage, a volatile read-and-write memory, a read-only memory (ROM), or the like, or any combination thereof. Exemplary mass storage may include a magnetic disk, an optical disk, a solid-state drives, etc. Exemplary removable storage may include a flash drive, a floppy disk, an optical disk, a memory card, a zip disk, a magnetic tape, etc. Exemplary volatile read-and-write memory may include a random access memory (RAM). Exemplary RAM may include a dynamic RAM (DRAM), a double date rate synchronous dynamic RAM (DDR SDRAM), a static RAM (SRAM), a thyristor RAM (T-RAM), and a zero-capacitor RAM (Z-RAM), etc. Exemplary ROM may include a mask ROM (MROM), a programmable ROM (PROM), an erasable programmable ROM (EPROM), an electrically erasable programmable ROM (EEPROM), a compact disk ROM (CD-ROM), and a digital versatile disk ROM, etc. In some embodiments, the database 150 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

In some embodiments, the database 150 may be connected to the network 120 to communicate with one or more components in the data updating system 100 (e.g., the server 110, the requester terminal 130, the provider terminal 140, etc.). One or more components in the data updating system 100 may access the data or instructions stored in the database 150 via the network 120. In some embodiments, the database 150 may be directly connected to or communicate with one or more components in the data updating system 100 (e.g., the server 110, the requester terminal 130, the provider terminal 140, etc.). In some embodiments, the database 150 may be part of the server 110. The database 150 may be a POI database to store POI information.

In some embodiments, data updating in the data updating system 100 may be achieved by way of requesting a service. The object of the service request may be any product. In some embodiments, the product may be a tangible product, or an intangible product. The tangible product may include food, medicine, commodity, chemical product, electrical appliance, clothing, car, housing, luxury, or the like, or any combination thereof. The intangible product may include a service product, a financial product, a knowledge product, an internet product, or the like, or any combination thereof. The internet product may include an individual host product, a web product, a mobile internet product, a commercial host product, an embedded product, or the like, or any combination thereof. The mobile internet product may be implemented as a software of a mobile terminal, a program, a system, or the like, or any combination thereof. The mobile terminal may include a tablet computer, a laptop computer, a mobile phone, a personal digital assistance (PDA), a smart watch, a point of sale (POS) device, an onboard computer, an onboard television, a wearable device, or the like, or any combination thereof. For example, the product may be any software and/or application used in the computer or mobile phone. The software and/or application may relate to socializing, shopping, transporting, entertainment, learning, investment, or the like, or any combination thereof. In some embodiments, the software and/or application related to transporting may include a traveling software and/or application, a vehicle scheduling software and/or application, a mapping software and/or application, etc. In the vehicle scheduling software and/or application, the vehicle may include a horse, a carriage, a rickshaw (e.g., a wheelbarrow, a bike, a tricycle, etc.), a car (e.g., a taxi, a bus, a private car, etc.), a train, a subway, a vessel, an aircraft (e.g., an airplane, a helicopter, a space shuttle, a hot-air balloon, etc.), or the like, or any combination thereof.

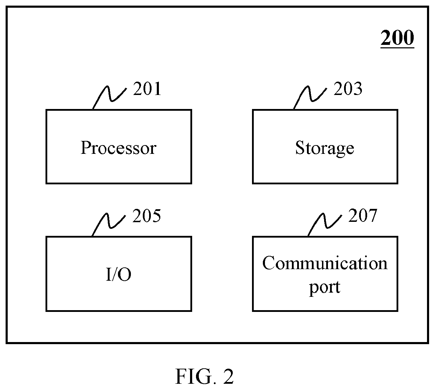

FIG. 2 is a schematic diagram illustrating exemplary hardware and /or software components of an exemplary computing device 200 on which the processing engine 112 may be implemented according to some embodiments of the present disclosure. As illustrated in FIG. 2, the computing device 200 includes a processor 201, a storage 203, an input/output (I/O) 205, and a communication port 207.

The processor 201 executes computer instructions (e.g., program code) and perform functions of the processing engine 112 in accordance with techniques described herein. The computer instructions may include, for example, routines, programs, objects, components, data structures, procedures, modules, and functions, which perform particular functions described herein. For example, the processor 201 may process data related to POI information (e.g., voice data, text data, etc.) obtained from the server 110, the requester terminal 130, the provider terminal 140, the database 150, and/or any other component of the data updating system 100. In some embodiments, the processor 201 may include one or more hardware processors, such as a microcontroller, a microprocessor, a reduced instruction set computer (RISC), an application specific integrated circuits (ASICs), an application-specific instruction-set processor (ASIP), a central processing unit (CPU), a graphics processing unit (GPU), a physics processing unit (PPU), a microcontroller unit, a digital signal processor (DSP), a field programmable gate array (FPGA), an advanced RISC machine (ARM), a programmable logic device (PLD), any circuit or processor capable of executing one or more functions, or the like, or any combinations thereof.

Merely for illustration, only one processor is described in the computing device 200. However, it should be noted that the computing device 200 in the present disclosure may also include multiple processors, thus operations and/or method operations that are performed by one processor as described in the present disclosure may also be jointly or separately performed by the multiple processors. For example, if in the present disclosure the processor of the computing device 200 executes both operation A and operation B, it should be understood that operation A and operation B may also be performed by two or more different processors jointly or separately in the computing device 200 (e.g., a first processor executes operation A and a second processor executes operation B, or the first and second processors jointly execute operations A and B).

The storage 203 may store data/information obtained from the server 110, the requester terminal 130, the provider terminal 140, the database 150, and/or any other component of the data updating system 100. In some embodiments, the storage 203 may include a mass storage, a removable storage, a volatile read-and-write memory, a read-only memory (ROM), or the like, or any combination thereof. For example, the mass storage may include a magnetic disk, an optical disk, a solid-state drives, etc. The removable storage may include a flash drive, a floppy disk, an optical disk, a memory card, a zip disk, a magnetic tape, etc. The volatile read-and-write memory may include a random access memory (RAM). The RAM may include a dynamic RAM (DRAM), a double date rate synchronous dynamic RAM (DDR SDRAM), a static RAM (SRAM), a thyristor RAM (T-RAM), and a zero-capacitor RAM (Z-RAM), etc. The ROM may include a mask ROM (MROM), a programmable ROM (PROM), an erasable programmable ROM (EPROM), an electrically erasable programmable ROM (EEPROM), a compact disk ROM (CD-ROM), and a digital versatile disk ROM, etc. In some embodiments, the storage 203 may store one or more programs and/or instructions to perform exemplary methods described in the present disclosure. For example, the storage 203 may store a program for the processing engine 112 for updating POI information.

The I/O 205 may input and/or output signals, data, information, etc. In some embodiments, the I/O 205 may enable a user interaction with the processing engine 112. In some embodiments, the I/O 205 may include an input device and an output device. Examples of the input device may include a keyboard, a mouse, a touch screen, a microphone, or the like, or any combination thereof. Examples of the output device may include a display device, a loudspeaker, a printer, a projector, or the like, or any combination thereof. Examples of the display device may include a liquid crystal display (LCD), a light-emitting diode (LED)-based display, a flat panel display, a curved screen, a television device, a cathode ray tube (CRT), a touch screen, or the like, or any combination thereof.

The communication port 207 may be connected to a network (e.g., the network 120) to facilitate data communications. The communication port 207 may establish connections between the processing engine 112 and the requester terminal 130, the provider terminal 140, and/or the database 150. The connection may be a wired connection, a wireless connection, any other communication connection that can enable data transmission and/or reception, and/or any combination of these connections. The wired connection may include, for example, an electrical cable, an optical cable, a telephone wire, or the like, or any combination thereof. The wireless connection may include, for example, a Bluetooth^{™} link, a Wi-Fi^{™} link, a WiMax^{™} link, a WLAN link, a ZigBee link, a mobile network link (e.g., 3G, 4G, 5G, etc.), or the like, or any combination thereof. In some embodiments, the communication port 207 may be and/or include a standardized communication port, such as RS232, RS485, etc.

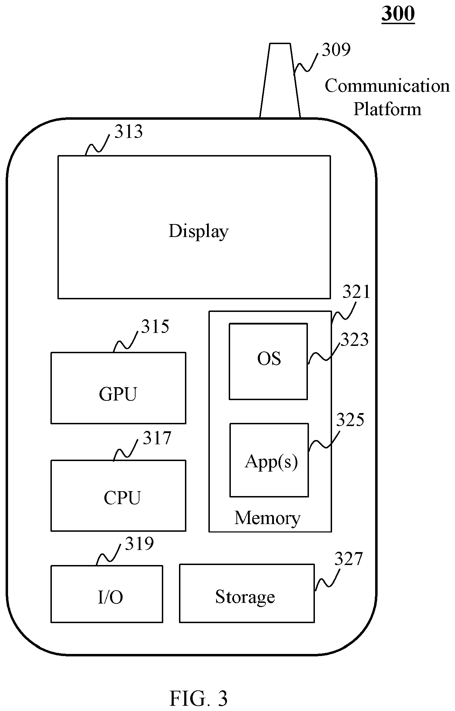

FIG. 3 is a schematic diagram illustrating exemplary hardware and/or software components of an exemplary mobile device 300 on which the requester terminal 130 may be implemented according to some embodiments of the present disclosure. As illustrated in FIG. 3, the mobile device 300 may include a communication platform 309, a display 313, a graphic processing unit (GPU) 315, a central processing unit (CPU) 317, an I/O 319, a memory 321, and a storage 327. In some embodiments, any other suitable component, including but not limited to a system bus or a controller (not shown), may also be included in the mobile device 300. In some embodiments, a mobile operating system 323 (e.g., iOS^{™}, Android^{™}, Windows Phone^{™}, etc.) and one or more applications 325 may be loaded into the memory 321 from the storage 327 in order to be executed by the CPU 317. The applications 325 may include a browser or any other suitable mobile apps for receiving and rendering information related to image processing or other information from the processing engine 112. User interactions with the information stream may be achieved via the I/O 319 and provided to the processing engine 112 and/or other components of the data updating system 100 via the network 120.

To implement various modules, units, and their functionalities described in the present disclosure, computer hardware platforms may be used as the hardware platform(s) for one or more of the elements described herein. A computer with user interface elements may be used to implement a personal computer (PC) or any other type of work station or terminal device. A computer may also act as a server if appropriately programmed.

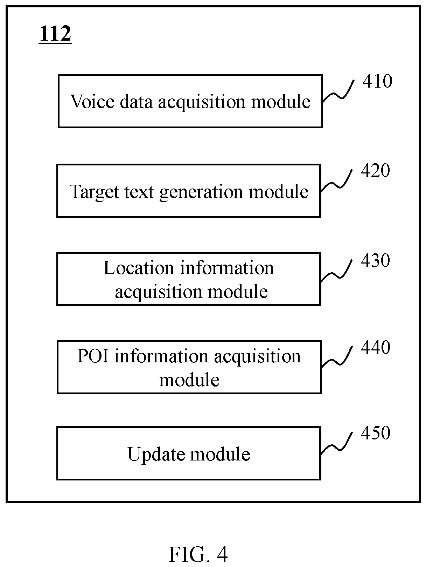

FIG. 4 is a block diagram illustrating an exemplary processing engine 112 according to some embodiments of the present disclosure. The processing engine 112 includes a voice data acquisition module 410, a target text generation module 420, a location information acquisition module 430, a POI information acquisition module 440, and an update module 450. Each module may include hardware circuitry that is designed to perform the following actions, a set of instructions stored in one or more storage media, and/or any combination of the hardware circuitry and the one or more storage media.

The voice data acquisition module 410 acquires voice data relating to a journey. The term "journey" herein used refers to an act or a proposed act of traveling from one place to another. In some embodiments, the voice data acquisition module 410 may acquire the voice data from the network 120, the requester terminal 130, the provider terminal 140, the database 150, the I/O 319, the storage 327, or any other devices disclosed in the present disclosure capable of storing data. In the embodiments of the invention, the obtained voice data relates to a journey. For example, the voice data acquisition module 410 receives voice data including information of a journey, such as "I am in area B of building 2 in Digital Valley, and I am going to the west gate of Peking University".

In some embodiments, the voice data acquisition module 410 may acquire voice data in a form of voice segment. The voice segments may be input by a passenger to dispatch an on-demand service request through, for example, the requester terminal 130. The request of the on-demand service may include a real-time request, an appointment request, or a pending request. In some embodiments, the voice data acquisition module 410 transmits the obtained voice data to the target text generation module 420 for target text generation. In some embodiments, the voice data acquisition module 410 transmits the obtained voice data to a storage device (e.g., the storage 327, the database 150, etc.) for data storage.

The target text generation module 420 generates target text relating to a location based on the voice data. The target text generation module 420 acquires voice data from the voice data acquisition module 410, and generates the target text based on the voice data. In the embodiments of the invention, the target text relates to a location. The location may refer to a point in the journey, such as the starting point of the journey, the ending point of the journey, or one or more points between the starting point and the ending point in the journey.

In some embodiments, the target text generation module 420 transforms the voice data relating to the journey into text, and then extract target text of one or more locations from the text generated after the transformation. As used herein, in certain embodiments, the target text may be a portion of the text generated based on the voice data. For example, the target text is the name of the location. In certain embodiments, the target text may be an entirety of the text generated based on the voice data. In some embodiments, the target text generation module 420 identify target voice data relating to a location from the obtained voice data, and transform the target voice data into target text. As used herein, in certain embodiments, the target voice data may be a portion of the obtained voice data. In certain embodiments, the target voice data may be entirety of the obtain voice data.

In some embodiments, the target text generation module 420 may transform voice data into text according to one or more algorithms, for example, a speech recognition algorithm. Exemplary speech recognition algorithms may include but not be limited to Hidden Markov Models (HMMs), Dynamic Time Warping (DTW)-Based Speech Recognition, Neural Networks, Deep Feedforward and Recurrent Neural Networks (DNN), End-to-End Automatic Speech Recognition (ASR), or the like, or any combination thereof.

The target text generation module 420 extracts or identifies information related to a location according to one or more techniques, such as a machine learning technique, a neural network technique, etc. Merely for illustration purposes, the machine learning technique may include a Restricted Boltzmann Machine (RBN), a Deep Belief Networks (DBN), a Convolutional Network, a Stacked Auto-encoders, etc. The neural network technique may include a Perceptron Neural Network, a Back Propagation, a Hopfield Network, a Self-Organizing Map (SOM), or a Learning Vector Quantization (LVQ), etc. The target text generation module 420 may transmit the extracted or identified location information to the location information acquisition module 430 for obtaining the location information, or a storage device (e.g., the storage 327, the database 150, etc.) for data storage.

The location information acquisition module 430 acquires location information relating to a location in the journey. In the embodiments of the invention, the location information acquisition module 430 acquires location information based on target text obtained from the target text generation module 420. The location information acquisition module 430 may acquire location information from a database (e.g., the database 150), a cloud server, a storage (e.g., the storage 327), or any other devices capable of storing data. The location information may include different types of information. The location information relates to geographic information of the location.

In some embodiments, the location information may include longitude and latitude information of the location. In some embodiments, the location information may also include directions and distances of the location relative to a well-established known location. The location information acquisition module 430 may acquire the longitude and latitude information and/or other location information based on a positioning technology. The positioning technology used in the present disclosure may be include a global positioning system (GPS), a global navigation satellite system (GLONASS), a compass navigation system (COMPASS), a Galileo positioning system, a quasi-zenith satellite system (QZSS), a wireless fidelity (WiFi) positioning technology, or the like, or any combination thereof. One or more of the above positioning technologies may be used interchangeably in the present disclosure. The location information acquisition module 430 may transmit the obtained location information to the POI information acquisition module 440 for acquiring the POI information of the location based on the location information, or a storage device (e.g., the storage 327, the database 150, etc.) for data storage.

In the embodiments of the invention, the POI information acquisition module 440 acquires POI information of a location. The POI information acquisition module 440 acquires the POI information based on the location information acquired from the location information acquisition module 430. In some embodiments, the POI information acquisition module 440 may acquire the longitude and latitude information and/or other location information from the location information acquisition module 430, and acquire the POI information based on the longitude and latitude information and/or other location information. The POI information is stored in a POI information database, which is implemented in a storage device (e.g., the database 150, or the storage 327). The POI information acquisition module 440 acquires the POI information from the POI information database.

The POI information database may include POI information of a country, a province, a city, a district, a street, or the like. Merely for illustration purposes, the POI information may include but not be limited to transportation information (e.g., traffic jams, road uptake), convenience services (e.g., supermarket, banks, service price, a ranking of recommendation, discount, coupon event), panorama images of the location, opening time, weather information, breaking news, social activities, or the like, or any combination thereof. The POI information includes in any case one or more POI names of the location. The POI names in the POI information may include official names, short names, abbreviations, nick names, trivial names, or the like, or any combination thereof. Taking Inner Mongolia as an example, the official name may be Inner Mongolia Autonomous Region, the short name may be Inner Mongolia, the abbreviation may be INAR, and the trivial name may be Nei Monggol. The POI information acquisition module 440 may transmit the POI information of the location into the update module 450 for updating the POI information of the location, and/or to a storage device (e.g., the storage 327, the database 150, etc.) for data storage.

The update module 450 may update POI information of the location. The update module 450 may update the POI information of the location based on the POI information acquired from the POI information acquisition module 440. In the embodiments of the invention, the update module 450 makes a determination as to whether the POI information already includes the target text. If the POI information does not include the target text, POI information of the location may be updated based on the target text. In some embodiments, the target text may be added into the POI information as a POI name in the POI database.

Furthermore, the update module 450 determines whether to update the POI information based on how likely the target text is correct. In the embodiments of the invention, the likelihood of correctness is determined based on the similarities between the target text (e.g. name of the location) and the existing POI names. For example, the update module 50 determine a similarity value between the target text and each of the POI names in the POI information. In some embodiments, the update module 450 may determine the similarity value according to a text similarity test algorithm. The text similarity test algorithm may include Term Frequency-Inverse Document Frequency (TF-IDF), Singular Value Decomposition (SVD), Latent Semantic Indexing (LSI), Latent Dirichlet Allocation (LDA), SimHash, Cosine Algorithm based on Vector Space Model, or the like, or any combination thereof. If the similarity value is larger than a first threshold, the update module 450 adds the target text into the POI information of the location. In some embodiments, the first threshold may be set by a user, according to default settings of the data updating system 100. The first threshold may be 0.6, 0.65, 0.7, 0.75, 0.8, 0.85, 0,9, or the like.

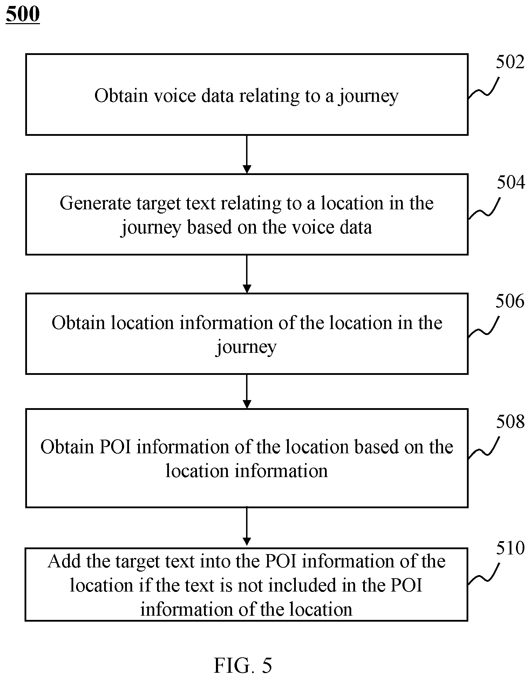

FIG. 5 is a flowchart illustrating an exemplary process for updating a POI name of a location according to some embodiments of the present disclosure. In some embodiments, the process 500 may be executed by the data updating system 100. For example, the process 500 may be implemented as a set of instructions (e.g., an application) stored in database 150, and/or storage 327. The server 110 and/or the CPU 317 may execute the set of instructions and may accordingly be directed to perform the process and/or method 500. The CPU 317 may be a processor of a computer server supporting an online on-demand service platform. The platform may be an Internet-based platform that connects on-demand service providers and requesters through Internet. In some embodiments, at least part of the process 500 may be performed by the computing device 200 shown in FIG. 2.

In 502, voice data relating to a journey is obtained. In some embodiments, 502 may be performed by the voice data acquisition module 410. The voice data relating to the journey may be voice segments. The voice segments may be input by a requester to dispatch an on-demand service request through, for example, the requester terminal 130. The on-demand service may be a delivery service, a taxi transportation service, a test drive service, a designated driving service, or the like, or any combination thereof. The voice segments may be related to an on-demand service including a real-time request, an appointment request, or a pending request, or the like.

The voice data may include a complete speech and/or a plurality of speeches. As used here, the term "speech" refers to a section of voice input that is substantially separated (e.g., by time, by meaning, and/or by specific design of input format) from other sections. In some embodiments, the I/O 319 of the requester terminal 130 may provide an input port for the requesters to receive a complete speech relating to the journey. For example, the I/O 319 may receive a complete speech from a user, such as "I am in area B of building 2 in Digital Valley, and I am going to the west gate of Peking University". The voice data relating to the journey may be a voice segment, such as "I am in area B of building 2 in Digital Valley, and I am going to the west gate of Peking University". In some embodiments, the I/O 319 of the requester terminal 130 may also provide two or more input ports for the requesters to receive a plurality of speeches relating to the journey upon separate prompts. For example, the two input ports may include a starting point input port and an ending point input port. The requester may input a speech, such as "area B of building 2 in Digital Valley", which may be received by the starting point input port. Then the requester may input another speech, such as "west gate of Peking University", which may be received by the ending point input port. The voice data relating to the journey may include a first voice segment "area B of building 2 in Digital Valley" and a second voice segment "west gate of Peking University".

In 504, target text relating to a location is generated based on the voice data. In some embodiments, 504 may be performed by the target text generation module 420. In some embodiments, the location may refer to a point in the journey, such as the starting point of the journey, the ending point of the journey, or one or more points between the starting point and the ending point in the journey, or the like, or any combination thereof.

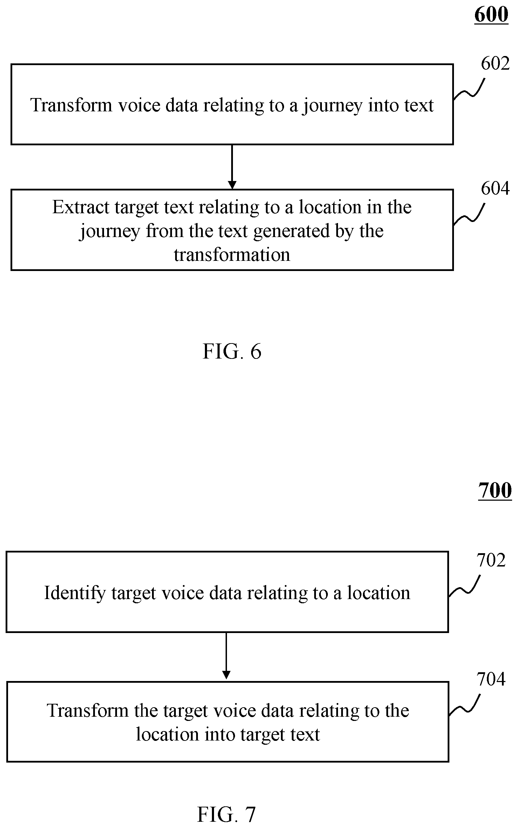

In some embodiments, the target text relating to the location may be generated in different ways. For example, the voice data in forms of a speech may be transformed into text, and then a portion of the text may be extracted as target text relating to a location. As another example, the target text generation module 420 may identify target voice data relating to a location, which may be a portion of the voice data obtained in 502, and then transform the target voice data into target text. Details regarding the target text generation may be described elsewhere in the present disclosure, for example, FIGS. 6 and 7 and the descriptions thereof.

In 506, location information relating to the location is acquired. In some embodiments, 506 may be performed by the location information acquisition module 430. The location information may include different types of information related to the location. The location information relates to geographic information of the location.

In some embodiments, the location information may include longitude and latitude information of the location. In some embodiments, the location information may also include directions and distances of the location relative to a well-established known location. The location information acquisition module 430 may acquire the longitude and latitude information and/or other location information based on a positioning technology. The positioning technology used in the present disclosure may be include a global positioning system (GPS), a global navigation satellite system (GLONASS), a compass navigation system (COMPASS), a Galileo positioning system, a quasi-zenith satellite system (QZSS), a wireless fidelity (WiFi) positioning technology, or the like, or any combination thereof.

In 508, POI information of the location is acquired based on the location information. In some embodiments, 508 may be performed by the POI information acquisition module 440. In some embodiments, the POI information is acquired after determining the location based on the geographic information.

In some embodiments, the POI information may include detailed information of the location, such as but not limited to photographs of the streets, traffic jams, road uptake, supermarket, banks, schools, service price, discount, opening times, a panorama image of the location, weather conditions, breaking news, etc. The POI information further includes one or more names of the POI. The one or more names in the POI information may include official names, short names, abbreviations, trivial names, or the like, or any combination thereof.

In 510, the POI information is updated based on the target text. In some embodiments, 510 may be performed by the update module 450. In the embodiments of the invention, the POI information is updated by adding the target text into the POI information of the location. In embodiments not belonging to the present invention, the POI information may be updated by replacing some part of the POI information (e.g., one or more POI names) with the target text.

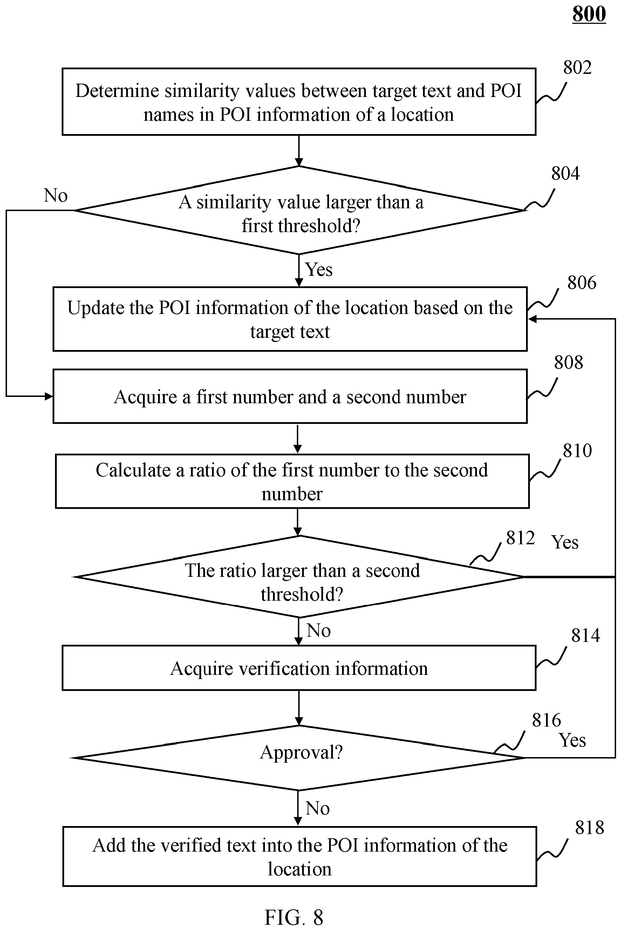

In the embodiments of the invention, a determination is made as to whether the POI information includes the POI name indicated by the target text. If the POI names related to the location does not include the POI name represented by the target text, the target text may be used to update the POI information. In certain embodiments, the target text may be added into the POI names in the POI database. For example, the requester may input the speech, such as "I'm going to the west gate of Peking University", which may be received by an ending point input port. The target text may be "west gate of Peking University". A determination as to whether the POI name of the location includes "west gate of Peking University" may be made. Merely for illustration purposes, the POI name of the location may include, for example, "Peking University West Gate" and "Schoolfellow Gate". The POI names of the location do not include the target text "west gate of Peking University". Besides, since "Peking University West Gate" has a high similarity with "west gate of Peking University", the target text "west gate of Peking University" may be added into the POI names, as part of the POI information for the location, in the POI database. Details regarding the POI information updating may be described elsewhere in the present disclosure, for example, FIG. 8 and the descriptions thereof.

FIG. 6 is a flowchart illustrating an exemplary process for generating target text relating to a location according to some embodiments of the present disclosure. In some embodiments, at least part of the process 600 may be performed by one or more components in the server 110.

In 602, voice data relating to a journey is transformed into text. In some embodiments, 602 may be performed by the target text generation module 420. The voice data may be transformed into text according to a speech recognition algorithm. Exemplary speech recognition algorithms may include Hidden Markov Models (HMMs), Dynamic Time Warping (DTW)-Based Speech Recognition, Neural Networks, Deep Feedforward and Recurrent Neural Networks (DNN), End-to-End Automatic Speech Recognition (ASR), or the like, or any combination thereof. In some embodiments, acoustic modeling and/or language modeling may be used in the speech recognition algorithm. Merely for illustration purposes, the voice data relating to the journey may be a voice segment, such as "I am in area B of building 2 in Digital Valley, and I am going to the west gate of Peking University". The above voice data may be transformed directly into the text "I am in area B of building 2 in Digital Valley, and I am going to west gate of Peking University" without any changes.

In 604, target text relating to a location in the journey is extracted from the text generated after the transformation. In some embodiments, 604 may be performed by the target text generation module 420. The extracted target text may relate to a point in the journey, such as the starting point of the journey, the ending point of the journey, or one or more points between the starting point and the ending point in the journey, or the like, or any combination thereof. The extraction of the text generated by the transformation may be realized according to a text processing technology. Merely by ways of example, the text processing technology may include machine learning technology, a neural network technology, etc.

Merely for illustration purposes, the text generated by transformation may be, for example, "I am in area B of building 2 in Digital Valley, and I am going to the west gate of Peking University". The target text relating to locations in the text may be extracted using one or more of the above techniques. For example, "area B of building 2 in Digital Valley" and "west gate of Peking University" may be extracted as target text. The target text "area B of building 2 in Digital Valley" may be determined as the starting point of the journey, and "west gate of Peking University" may be determined as the ending point of the journey.

FIG. 7 is a flowchart illustrating an exemplary process for generating target text relating to a location according to some embodiments of the present disclosure. In some embodiments, at least part of the process 700 may be performed by one or more components in the server 110.

In 702, target voice data relating to the location is identified. In some embodiments, 702 may be performed by the target text generation module 420. The identification of the voice data relating to the location may be determined by a speech processing technique. In some embodiments, the speech processing technique may include machine learning technique, a neural network technique, etc. Merely for illustration purposes, the obtained voice data may be, for example, "I am in area B of building 2 in Digital Valley, and I am going to the west gate of Peking University". Target text "area B of building 2 in Digital Valley" and "west gate of Peking University" may be identified using one or more of the above techniques.

In some embodiments, the voice data may include a plurality of speeches. For example, the voice data relating to the journey may include a first target voice segment "area B of building 2 in Digital Valley" and a second target voice segment "west gate of Peking University". The first speech "area B of building 2 in Digital Valley" may be determined as first target voice data. The second speech "west gate of Peking University" may be determined as second target voice data.

In 704, the target voice data relating to the location is transformed into target text. In some embodiments, 704 may be performed by the target text generation module 420. The target voice data may be transformed directly into target text. The transformation may be realized by, for example, a speech recognition. The method for transforming target voice data into text may be same as or similar to the method described in 602 in the process 600. Exemplary speech recognition algorithms may include Hidden Markov Models (HMMs), Dynamic Time Warping (DTW)-Based Speech Recognition, Neural Networks, Deep Feedforward and Recurrent Neural Networks (DNN), End-to-End Automatic Speech Recognition (ASR), or the like, or any combination thereof.

In some embodiments, the voice data includes a plurality of speeches. In certain embodiments, certain steps as described above can be omitted if the speeches are provided according to pre-designed formats. For example, just for the purpose of illustration, through the prompting of a starting point input port, the requester may simply input "area B of Building 2 of Digital Valley" as the name of the starting point without additional words if the requirement is clear and strictly followed; and through the prompting or an end point input port, the requester may simply input "west gate of Peking University" without additional words if the requirement is clear and strictly followed. In certain embodiments, the specific format required by the input ports may prompt the requester to limit his/her input. In certain embodiments, it is not necessary to identify the target voice data. In certain embodiments, no further extraction is needed and the voice data may be directly transformed into the target text, which may be used to update the POI information. For example, just for the purpose of illustration, the voice data for the end point location "west gate of Peking University" may be transformed directly into text, which may be used as target text without further extraction.

FIG. 8 is a flowchart illustrating an exemplary process for updating POI names of a location according to some embodiments of the present disclosure. In some embodiments, at least part of the process 800 may be performed by one or more components in the server 110. In some embodiments, 802 through 818 in the process 800 may be performed by the update module 450.

In 802, similarity values between target text and POI names in POI information is determined. The similarity values between the target text and a plurality of POI names may be determined by comparing the target text with each of the plurality of names in the POI name of the location.

The similarity value may be determined according to a text similarity determination algorithm. Exemplary text similarity determination algorithm may include Term Frequency-Inverse Document Frequency (TF-IDF), Singular Value Decomposition (SVD), Latent Semantic Indexing (LSI), Latent Dirichlet Allocation (LDA), SimHash, Cosine Algorithm based on Vector Space Model, or the like, or any combination thereof.

In 804, a determination as to whether a similarity value is larger than a first threshold is determined. In some embodiments, the first threshold may be set by a user, according to default settings of the data updating system 100. In some embodiments, the first threshold can be adjusted. In some embodiments, the first threshold may be a decimal, for example, 0.5. 0.55, 0.6, 0.65, 0.7, 0.75, 0.8, 0.85, 0.9, 0.95 or the like. In some embodiments, the first threshold may vary according to other parameters. For example, it can be set that the first threshold for small business POI (e.g. small restaurants, street corner grocery stores, etc.) is a relatively smaller number (e.g. 0.5, 0.55, 0.6, etc.); and that the first threshold for large institutions is a larger number (e.g., 0.8, 0.85, 0.9, 0.95, etc.). Such approaches may reflect the perception that it is more likely for the smaller businesses to have more varying POI names, and/or more likely to be replaced.

In the embodiments of the invention, if the similarity value is larger than the first threshold, the process 800 proceeds to 806 to update the POI information based on the target text. In some embodiments, if the similarity value is smaller than the first threshold, the process 800 may proceed to 808 to acquire a first number and a second number.

In 806, the POI information of the location is updated based on the target text. In the embodiments of the invention, if the similarity value is larger than the first threshold, the POI information of the location is updated based on the target text. It is noted that the similarity value should not be 1, which indicates that the target text is exactly the same as at least part of the POI information (e.g., one of the POI names). In that case, no update is necessary.

In some embodiments, the similarity value reflects the closeness of the target text to at least part of the POI information (e.g., one of the POI names). The steps 804 and 806 represent the approach that the target text needs to be close enough to part of the POI information to lead to an update of the POI information. Such an approach differs from non-selective updating of the POI information each time a target text is produced and avoids unnecessary/mistaken update of the POI information due to instances such as but not limited to requester's error. In some embodiments, the updating would take place when the similarity value is in a preset range: e.g. 0.5-0.95, 0.6-0.95, 0.7-0.95, 0.8-0.95, 0.9-0.95, 0.5-0.9, 0.6-0.9, 0.7-0.9, or 0.8-0.9.

In 808, if the similarity value is smaller than the first threshold value, a first number and a second number may be obtained. The first number and the second number may reflect the frequency or likelihood that the target text is used to describe and/or designate the intended location. In some embodiments, the first number may represent the number of times that the location is referred to with the target text in a time period by requesters in an on-line service platform. The second number may represent the total number of times that the location is referred to with any text in the same time period by requesters in the on-line service platform. For example, the target text may be "west gate of Peking University", however, the location may be referred to with other names such as "west gate of Beijing University", "west gate of Yan Yuan campus", "Schoolfellow Gate", or the like. The first number may represent the number of times that the location is referred to with "west gate of Peking University", the second number may represent the total number of times that the location is referred to with any text, including "west gate of Beijing University", "west gate of Yan Yuan campus", "Schoolfellow Gate", etc. It should be noted, however, that the first number and the second number are not limited by the example above can include other parameters that reflect the frequency and/or likelihood that the target text is used.

In 810, a ratio between the first number and the second number may be calculated. Since the first number may be smaller than or equal to the second number, the ratio may be a decimal between 0 and 1. The ratio may indicate a probability the location may be referred to with the target text.

In 812, a determination as to whether the ratio is larger than a second threshold may be determined. In some embodiments, the second threshold may be set by a user, according to default settings of the data updating system 100. In some embodiments, the first threshold can be adjusted. In some embodiments, the second threshold may be a decimal, such as 0.05, 0.1, 0.15, 0.2, 0.25, 0.3, 0.35, 0.4, 0.45, 0.5, or the like. If the ratio is larger than the second threshold, the process 800 may proceed to 806 to update the POI information based on the target text. If the ratio is smaller than the second threshold, the process 800 may proceed to 814 to acquire verification information.

In 814, if the ratio is smaller than the second threshold, further and more stringent verification may be needed. In some embodiments, verification information may be acquired. In certain embodiments, the verification information may be acquired from a user (e.g., a surveyor). The verification information may be obtained via I/O 205 in the computing device or I/O 319 in the mobile device. In some embodiments, a user may check whether the target text is a POI name of the location, and input verification information indicating his/her suggestions. For example, the user can physically visit the POI location or remotely contact the business/institution at the POI location and seek additional information to confirm and/or controvert the target text. The verification information may include an approval, a rejection, verified text, or the like. If a user agrees that the target text is a POI name of the location, the user may approve to add the target text into the POI information. If the user does not agree that the target text is a POI name of the location, the user may input verified text indicating the real name of the location or simply indicate that the POI name does not need update.

In 816, a determination as to whether the target text is approved to be added into the POI information may be made. If the user approves to add the target text into the POI information or replace a part of the POI information, the process 800 may proceed to 806 to update the POI information based on the target text. If the user rejects adding the target text into the POI information, the users may input a verified text, for example, via the I/O 319, and the process 800 may simply end or proceed to 818 to update the POI information of the location based on the verified text. In 818, the verified text may be added into the POI information or replace a part of the POI information of the location. For example, the user may see the sign of the business at the POI and determine that the name on the sign is the most relevant POI name but the target text is not correct; then the user may put the name on the sign in the verified text and indicate that this is a better foundation for an update of the POI information.

It should be noted that certain steps in the process 800 may be omitted and/or replaced with other steps. For example, it is not always required that the first and second number be obtained only after the similarity value is larger than the first threshold. In some embodiments, the steps 802 and 804 can be omitted and whether the POI information is updated (as in step 806) is determined by whether the ratio of the first number and the second number is larger than the second threshold. Similar omissions can also apply to steps 808-812 or steps 814-816, or other steps and step combinations thereof.

For 806, In the embodiments of the invention, the POI information is updated by adding the target text into the POI information. Alternatively, according to embodiments not belonging to the present invention, the POI information may be updated by replacing part of the POI information with the target text. In addition, the specific action taken in 806 can be determined by what is the proceeding step of 806. For example, in certain embodiments, if 804 or 812 proceeds 806, the target text is added to the POI information; if 816 proceeds 806, the target text may replace part of the POI information when the user agrees to do so in the verification text.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit," "module," or "system." Furthermore, aspects of the present disclosure may take the form of a computer program product embodied in one or more computer readable media having computer readable program code embodied thereon.

A computer readable signal medium may include a propagated data signal with computer readable program code embodied therein, for example, in baseband or as part of a carrier wave. Such a propagated signal may take any of a variety of forms, including electro-magnetic, optical, or the like, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable signal medium may be transmitted using any appropriate medium, including wireless, wireline, optical fiber cable, RF, or the like, or any suitable combination of the foregoing.

Computer program code for carrying out operations for aspects of the present disclosure may be written in any combination of one or more programming languages, including an object-oriented programming language such as Java, Scala, Smalltalk, Eiffel, JADE, Emerald, C++, C#, VB. NET, Python or the like, conventional procedural programming languages, such as the "C" programming language, Visual Basic, Fortran 2003, Perl, COBOL 2002, PHP, ABAP, dynamic programming languages such as Python, Ruby and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS).

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

## Claims

1. A system (100) for updating point of interest (POI) information, comprising:
at least one storage medium including a set of instructions for updating POI information; and
at least one processor (201) configured to communicate with the at least one storage media, wherein when executing the set of instructions, the at least one processor (201) is directed to perform operations including:
obtaining voice data relating to a journey and comprising information indicative of a location;
generating target text relating to the location in the journey based on the voice data;
obtaining location information of the location in the journey, the location information of the location being related to geographic information of the location;
obtaining POI information of the location based on the location information from a POI information database for storing POI information, the POI information of the location including one or more names of a POI; and
adding the target text relating to the location into the POI information of the location if the target text is not included in the POI information and a similarity value between the target text relating to the location and the POI information of the location exceeds a first threshold.

2. The system of claim 1, wherein generating target text relating to the location in the journey based on the voice data includes:
transforming the voice data relating to a journey into text; and
extracting the target text relating to a location in the journey from the text generated by the transformation.

3. The system of claim 1 or 2, wherein generating target text relating to the location in the journey based on the voice data includes:
identifying the voice data relating to a location from the voice data relating to the journey; and
transforming the voice data relating to the location into the target text.

4. The system of claim 1, the operations further comprising:
in response to the similarity value being smaller than the first threshold,
obtaining a first number and a second number, wherein the first number represents the number of times that the location is referred to as the target text, and the second number represents the number of times that the location is referred to;
calculating a ratio of the first number to the second number;
determining if the ratio is larger than a second threshold; and
in response to the ratio being larger than the second threshold,
adding the target text into the POI information of the location.

5. The system of claim 4, the operations further comprising:
in response to the ratio being smaller than the second threshold,
acquiring verification information; and
adding the target text into the POI information based on the verification information.

6. The system of claim 4, the operations further comprising:
in response to the ratio being smaller than the second threshold,
receiving a verified text relating to the location; and
adding the verified text into the POI information of the location.

7. The system of any one of claims 1-6, wherein acquiring location information of the location in the journey includes:
acquisition of longitude and latitude information of the location by monitoring a mobile terminal that is associated with a vehicle that reaches the location in the journey.

8. The system of any one of claims 1-6, wherein the voice data is provided by a requester terminal (130) making an on-demand request for the journey.

9. The system of any one of claims 1-6, wherein the POI information of the location includes location information and one or more names of the POI, and the target text includes a name of the POI.

10. A method implemented on a computing device having at least one processor (201) and at least one computer-readable storage medium, the method comprising:
obtaining voice data relating to a journey and comprising information indicative of a location;
generating target text relating to the location in the journey based on the voice data;
obtaining location information of the location in the journey, the location information of the location being related to geographic information of the location;
obtaining POI information of the location based on the location information from a POI information database for storing POI information, the POI information of the location including one or more names of a POI; and
adding the target text relating to the location into the POI information of the location if the target text is not included in the POI information and a similarity value between the target text relating to the location and the POI information of the location exceeds a first threshold.

11. The method of claim 10, wherein generating target text relating to the location in the journey based on the voice data includes:
transforming the voice data relating to a journey into text; and
extracting the target text relating to a location in the journey from the text generated by the transformation.

12. The method of claim 10 or 11, wherein generating target text relating to the location in the journey based on the voice data includes:
identifying the voice data relating to a location from the voice data relating to the journey;
transforming the voice data relating to the location into the target text.

13. The method of any one of claims 10-12, wherein acquiring location information of the location in the journey includes:
acquisition of longitude and latitude information of the location by monitoring a mobile terminal that is associated with a vehicle that reaches the location in the journey.

14. The method of any one of claims 10-12, wherein the voice data is provided by a requester terminal (130) making an on-demand request for the journey.

15. The method of any one of claims 10-12, wherein the POI information of the location includes location information and one or more names of the POI, and the target text includes a name of the POI.

## Patentansprüche

1. System (100) zum Aktualisieren von Point-of-Interest- (POI) Informationen, umfassend:
mindestens ein Speichermedium, das einen Satz von Anweisungen zum Aktualisieren von POI-Informationen einschließt; und
mindestens einen Prozessor (201), der so konfiguriert ist, dass er mit dem mindestens einen Speichermedium kommuniziert, wobei der mindestens eine Prozessor (201) bei der Ausführung des Satzes von Anweisungen angewiesen ist, Operationen durchzuführen, die Folgendes umfassen:
Erhalten von Sprachdaten, die sich auf eine Wegstrecke beziehen und Informationen umfassen, die einen Ort angeben;
Erzeugen, auf der Grundlage der Sprachdaten, von Zieltext, der sich auf den Ort auf der Wegstrecke bezieht;
Erhalten von Ortsinformationen des Ortes auf der Wegstrecke, wobei die Ortsinformationen des Ortes mit geografischen Informationen des Ortes in Beziehung stehen;
Erhalten von POI-Informationen des Ortes basierend auf den Ortsinformationen von einer POI-Informationsdatenbank zum Speichern von POI-Informationen, wobei die POI-Informationen des Ortes einen oder mehrere Namen eines POI einschließen; und
Hinzufügen des Zieltextes, der sich auf den Ort bezieht, zu den POI-Informationen des Ortes, wenn der Zieltext nicht in den POI-Informationen eingeschlossen ist und ein Ähnlichkeitswert zwischen dem Zieltext, der sich auf den Ort bezieht, und den POI-Informationen des Ortes einen ersten Schwellenwert überschreitet.

2. System nach Anspruch 1, wobei das Erzeugen von Zieltext, der sich auf den Ort auf der Wegstrecke bezieht, auf der Grundlage der Sprachdaten Folgendes einschließt:
Umwandeln der Sprachdaten, die sich auf eine Wegstrecke beziehen, in Text; und
Extrahieren des Zieltextes, der sich auf einen Ort auf der Wegstrecke bezieht, aus dem durch die Umwandlung erzeugten Textes.

3. System nach Anspruch 1 oder 2, wobei das Erzeugen von Zieltext, der sich auf den Ort auf der Wegstrecke bezieht, auf der Grundlage der Sprachdaten Folgendes einschließt:
Erkennen der Sprachdaten, die sich auf einen Ort beziehen, aus den Sprachdaten, die sich auf die Wegstrecke beziehen; und
Umwandeln der Sprachdaten, die sich auf den Ort beziehen, in den Zieltext.

4. System nach Anspruch 1, wobei die Operationen weiter umfassen:
als Reaktion darauf, dass der Ähnlichkeitswert kleiner als der erste Schwellenwert ist,
Erhalten einer ersten Zahl und einer zweiten Zahl, wobei die erste Zahl die die Anzahl der Male darstellt, die der Ort als Zieltext genannt wird, und die zweite Zahl die Anzahl die Anzahl der Male darstellt, die der Ort genannt wird;
Berechnen eines Verhältnisses zwischen der ersten Zahl und der zweiten Zahl;
Bestimmen, ob das Verhältnis größer als ein zweiter Schwellenwert ist; und in Reaktion darauf, dass das Verhältnis größer als der zweite Schwellenwert ist,
Hinzufügen des Zieltextes zu den POI-Informationen des Ortes.

5. System nach Anspruch 4, wobei die Operationen weiter umfassen:
als Reaktion darauf, dass das Verhältnis kleiner als der zweite Schwellenwert ist,
Erfassen von Verifizierungsinformationen; und
Hinzufügen des Zieltextes zu den POI-Informationen auf der Grundlage der Verifizierungsinformationen.

6. System nach Anspruch 4, wobei die Operationen weiter umfassen:
als Reaktion darauf, dass das Verhältnis kleiner als der zweite Schwellenwert ist, Empfangen eines verifizierten Textes, der sich auf den Ort bezieht; und Hinzufügen des verifizierten Textes zu den POI-Informationen des Ortes.

7. System nach einem der Ansprüche 1 bis 6, wobei das Erfassen von Ortsinformationen des Ortes auf der Wegstrecke Folgendes einschließt:
Erfassen der Längengrad- und Breitengradinformationen des Ortes durch Überwachen eines mobilen Endgeräts, das mit einem Fahrzeug verbunden ist, das den Ort auf der Wegstrecke erreicht.

8. System nach einem der Ansprüche 1 bis 6, wobei die Sprachdaten von einem Anforderungsendgerät (130) bereitgestellt werden, das eine Abrufanforderung für die Wegstrecke stellt.

9. System nach einem der Ansprüche 1-6, wobei die POI-Informationen des Ortes Ortsinformationen und einen oder mehrere Namen des POI einschließen und der Zieltext einen Namen des POI einschließt.

10. Verfahren, das auf einer Rechenvorrichtung mit mindestens einem Prozessor (201) und mindestens einem computerlesbaren Speichermedium implementiert ist, wobei das Verfahren umfasst:
Erhalten von Sprachdaten, die sich auf eine Wegstrecke beziehen und Informationen umfassen, die einen Ort angeben;
Erzeugen, auf der Grundlage der Sprachdaten, von Zieltext, der sich auf den Ort auf der Wegstrecke bezieht;
Erhalten von Ortsinformationen des Ortes auf der Wegstrecke, wobei die Ortsinformationen des Ortes mit geografischen Informationen des Ortes in Beziehung stehen;
Erhalten von POI-Informationen des Ortes basierend auf den Ortsinformationen von einer POI-Informationsdatenbank zum Speichern von POI-Informationen, wobei die POI-Informationen des Ortes einen oder mehrere Namen eines POI einschließen; und
Hinzufügen des Zieltextes, der sich auf den Ort bezieht, zu den POI-Informationen des Ortes, wenn der Zieltext nicht in den POI-Informationen eingeschlossen ist und ein Ähnlichkeitswert zwischen dem Zieltext, der sich auf den Ort bezieht, und den POI-Informationen des Ortes einen ersten Schwellenwert überschreitet.

11. Verfahren nach Anspruch 10, wobei das Erzeugen von Zieltext, der sich auf den Ort auf der Wegstrecke bezieht, auf der Grundlage der Sprachdaten Folgendes einschließt:
Umwandeln der Sprachdaten, die sich auf eine Wegstrecke beziehen, in Text; und
Extrahieren des Zieltextes, der sich auf einen Ort auf der Wegstrecke bezieht, aus dem durch die Umwandlung erzeugten Textes.

12. Verfahren nach Anspruch 10 oder 11, wobei das Erzeugen von Zieltext, der sich auf den Ort auf der Wegstrecke bezieht, auf der Grundlage der Sprachdaten Folgendes einschließt:
Erkennen der Sprachdaten, die sich auf einen Ort beziehen, aus den Sprachdaten, die sich auf die Wegstrecke beziehen;
Umwandeln der Sprachdaten, die sich auf den Ort beziehen, in den Zieltext.

13. Verfahren nach einem der Ansprüche 10-12, wobei das Erfassen von Ortsinformationen des Ortes auf der Wegstrecke Folgendes einschließt:
Erfassen der Längengrad- und Breitengradinformationen des Ortes durch Überwachen eines mobilen Endgeräts, das mit einem Fahrzeug verbunden ist, das den Ort auf der Wegstrecke erreicht.

14. Verfahren nach einem der Ansprüche 10 bis 12, wobei die Sprachdaten von einem Anforderungsendgerät (130) bereitgestellt werden, das eine Abrufanforderung für die Wegstrecke stellt.

15. Verfahren nach einem der Ansprüche 10-12, wobei die POI-Informationen des Ortes Ortsinformationen und einen oder mehrere Namen des POI einschließen und der Zieltext einen Namen des POI einschließt.

## Revendications

1. Système (100) pour mettre à jour des informations de point d'intérêt (POI), comprenant :
au moins un support de stockage incluant un ensemble d'instructions pour mettre à jour des informations de POI ; et
au moins un processeur (201) configuré pour communiquer avec le au moins un support de stockage, dans lequel, lors de l'exécution de l'ensemble d'instructions, le au moins un processeur (201) est dirigé pour effectuer des opérations incluant :
l'obtention de données vocales se rapportant à un trajet et comprenant des informations indiquant un emplacement ;
la génération d'un texte cible se rapportant à l'emplacement pendant le trajet sur la base des données vocales ;
l'obtention d'informations d'emplacement de l'emplacement pendant le trajet, les informations d'emplacement de l'emplacement étant associées à des informations géographiques de l'emplacement ;
l'obtention d'informations de POI de l'emplacement sur la base des informations d'emplacement à partir d'une base de données d'informations de POI pour stocker des informations de POI, les informations de POI de l'emplacement incluant un ou plusieurs noms d'un POI ; et
l'ajout du texte cible se rapportant à l'emplacement dans les informations de POI de l'emplacement si le texte n'est pas inclus dans les informations de POI et une valeur de similarité entre le texte cible se rapportant à l'emplacement et les informations de POI de l'emplacement dépasse un premier seuil.

2. Système selon la revendication 1, dans lequel la génération d'un texte cible se rapportant à l'emplacement pendant le trajet sur la base des données vocales inclut :
la transformation des données vocales se rapportant à un trajet en texte ; et
l'extraction du texte cible se rapportant à l'emplacement pendant le trajet à partir du texte généré par la transformation.

3. Système selon la revendication 1 ou 2, dans lequel la génération d'un texte cible se rapportant à l'emplacement pendant le trajet sur la base des données vocales inclut :
l'identification des données vocales se rapportant à un emplacement à partir des données vocales se rapportant au trajet ; et
la transformation des données vocales se rapportant à l'emplacement en texte cible.

4. Système selon la revendication 1, les opérations comprenant en outre :
en réponse à la valeur de similarité qui est plus petite que le premier seuil,
l'obtention d'un premier nombre et d'un second nombre, dans lequel le premier nombre représente le nombre de fois où le texte cible fait allusion à l'emplacement, et le second nombre représente le nombre de fois où il est fait allusion à l'emplacement ;
le calcul d'un rapport entre le premier nombre et le second nombre ;
la détermination si le rapport est plus grand que le second seuil ; et, en réponse au rapport qui est plus grand que le second seuil,
l'ajout du texte cible dans les informations de POI de l'emplacement.

5. Système selon la revendication 4, les opérations comprenant en outre :
en réponse au rapport qui est plus petit que le second seuil,
l'acquisition d'informations de vérification ; et
l'ajout du texte cible dans les informations de POI sur la base des informations de vérification.

6. Système selon la revendication 4, les opérations comprenant en outre :
en réponse au rapport qui est plus petit que le second seuil,
la réception d'un texte vérifié se rapportant à l'emplacement ; et
l'ajout du texte vérifié dans les informations de POI de l'emplacement.

7. Système selon l'une quelconque des revendications 1-6, dans lequel l'acquisition d'informations d'emplacement de l'emplacement pendant le trajet inclut :
l'acquisition d'informations de longitude et de latitude de l'emplacement en surveillant un terminal mobile qui est associé à un véhicule qui atteint l'emplacement pendant le trajet.

8. Système selon l'une quelconque des revendications 1-6, dans lequel les données vocales sont fournies par un terminal demandeur (130) faisant une requête à la demande pour le trajet.

9. Système selon l'une quelconque des revendications 1-6, dans lequel les informations de POI de l'emplacement incluent des informations d'emplacement et un ou plusieurs noms du POI et le texte cible inclut un nom du POI.

10. Procédé mis en œuvre sur un dispositif informatique présentant au moins un processeur (201) et au moins un support de stockage lisible par ordinateur, le procédé comprenant :
l'obtention de données vocales se rapportant à un trajet et comprenant des informations indiquant un emplacement ;
la génération d'un texte cible se rapportant à l'emplacement pendant le trajet sur la base des données vocales ;
l'obtention d'informations d'emplacement de l'emplacement pendant le trajet, les informations d'emplacement de l'emplacement étant associées à des informations géographiques de l'emplacement ;
l'obtention d'informations de POI de l'emplacement sur la base des informations d'emplacement à partir d'une base de données d'informations de POI pour stocker des informations de POI, les informations de POI de l'emplacement incluant un ou plusieurs noms d'un POI ; et
l'ajout du texte cible se rapportant à l'emplacement dans les informations de POI de l'emplacement si le texte n'est pas inclus dans les informations de POI et une valeur de similarité entre le texte cible se rapportant à l'emplacement et les informations de POI de l'emplacement dépasse un premier seuil.

11. Procédé selon la revendication 10, dans lequel la génération d'un texte cible se rapportant à l'emplacement pendant le trajet sur la base des données vocales inclut :
la transformation des données vocales se rapportant à un trajet en texte ; et
l'extraction du texte cible se rapportant à l'emplacement pendant le trajet à partir du texte généré par la transformation.

12. Procédé selon la revendication 10 ou 11, dans lequel la génération d'un texte cible se rapportant à l'emplacement pendant le trajet sur la base des données vocales inclut :
l'identification des données vocales se rapportant à un emplacement à partir des données vocales se rapportant au trajet ;
la transformation des données vocales se rapportant à l'emplacement en texte cible.

13. Procédé selon l'une quelconque des revendications 10-12, dans lequel l'acquisition d'informations d'emplacement de l'emplacement pendant le trajet inclut :
l'acquisition d'informations de longitude et de latitude de l'emplacement en surveillant un terminal mobile qui est associé à un véhicule qui atteint l'emplacement pendant le trajet.

14. Procédé selon l'une quelconque des revendications 10-12, dans lequel les données vocales sont fournies par un terminal demandeur (130) faisant une requête à la demande pour le trajet.

15. Procédé selon l'une quelconque des revendications 10-12, dans lequel les informations de POI de l'emplacement incluent des informations d'emplacement et un ou plusieurs noms du POI et le texte cible inclut un nom du POI.
